# EUROPEAN PATENT APPLICATION

(11) **EP 2 151 752 A1**
(43) Date of publication of application: **10.02.2010**
(21) Application number: 09251893.5
(22) Date of filing: 28.07.2009
(51) Int. Cl.: G06F 9/38

(54) **Thread ordering techniques**

(30) Priority: 31.07.2008 US 221083
(71) Applicant: Intel Corporation, Santa Clara, CA 95052 (US)
(72) Inventor: Dwyer, Michael K., El Dorado Hills, CA 95762 (US); Farrell, Robert L., Granite Bay, CA 95746 (US); Jiang, Hong, El Dorado Hills, CA 95762 (US); Piazza, Thomas A., Granite Bay, CA 95746 (US)
(74) Representative: Beresford, Keith Denis Lewis

(57) **Abstract**

Techniques are described that can be used to ensure ordered computation and/or retirement of threads in a multithreaded environment. Threads may contain bundled instances of work, each with unique ordering restrictions relative to other instances of work packaged in other threads in the system. When applied to 3D graphics, video and image processing domains allow unrestricted processing of threads until reaching their critical sections. Ordering may be required prior to executing critical sections and beyond.

## Description

### Field

The subject matter disclosed herein relates to managing order of operations, and more particularly, ordering of threaded processing.

### Related Art

In many computer applications, there is inherent parallelism provided by a routine and dataset over which that routine is applied. Parallelism may include processing of discrete elements of the dataset by the routine with minimal ordering requirements, to the extent that the routine can be applied to many elements of the dataset at the same time given sufficient computing resources exist to do so. In this case, data and instructions are bound into a "thread" and sent to a compute array for processing. Due to the parallelism, many instances of threads may exist in the compute array at any point in time, and some threads may lead or lag in their processing relative to other similar threads in the system, depending on many system level factors. Thus, completion of threads may not be in the order in which the threads were issued. In cases where ordering is required, techniques may be needed to ensure that ordering requirements are met, and the techniques are desired to have the least negative impact on overall performance.

For example, parallelism is particularly present in graphics processing, making it highly threaded. In some graphics processing systems, there are ordering requirements for a series of pixels for a given XY coordinate screen location to be retired in the order in which they were presented by the application. A retired series of pixels is one in which computation has completed and the pixels are available to be displayed. For example, retired pixels may be stored in a frame buffer. In three dimensional pixel processing algorithms, due to the volume of pixels processed simultaneously and their interaction with system resources, processing of pixels may complete out of order, which can cause pixels of the same XY coordinates to retire out of order.

In some cases, a stream of XY pixel locations has significant time between any same-XY series, such that any computations involving a write to that XY is no longer in flight before computations involving the same-XY are requested. Regardless of typical or natural ordering through a system, a mechanism is required to guarantee correct ordering.

Regardless of context, a threaded system may use techniques to achieve correct computation and/or output ordering. In the general case for threaded computation, one known ordering system achieves ordered processing and/or output by blocking thread issuance (or "dispatch") to a computational unit until all ordering requirements are met. In this case, a scoreboard is used to track the state of threads in the system and logic used to detect dependencies between threads. Another known system in cases where only output ordering is required uses a buffer that temporarily stores thread output and does not finally retire the output until all ordering rules are met for the associated thread.

### Brief Description of the Drawings

Embodiments of the present invention are illustrated by way of example, and not by way of limitation, in the drawings and in which like reference numerals refer to similar elements.

FIG. 1 depicts an example system embodiment in accordance with some embodiments of the present invention.

FIG. 2 depicts a high level block diagram of a thread ordering system in accordance with an embodiment of the present invention.

FIG. 3 depicts an example time line of operations of a thread orderer, in accordance with an embodiment of the present invention.

FIG. 4 depicts an example format of a scoreboard table, in accordance with an embodiment of the present invention.

FIG. 5 depicts an example implementation of the scoreboard (SB) and dependency accumulation logic, in accordance with an embodiment of the present invention.

FIG. 6 depicts an example format of a TDR register in accordance with an embodiment of the present invention.

FIG. 7 depicts an example format of a basic dependency cell in a TDR register, in accordance with an embodiment of the present invention.

FIG. 8 depicts an example flow diagram in accordance with an embodiment of the present invention.

### Detailed Description

Reference throughout this specification to "one embodiment" or "an embodiment" means that a particular feature, structure, or characteristic described in connection with the embodiment is included in at least one embodiment of the present invention. Thus, the appearances of the phrase "in one embodiment" or "an embodiment" in various places throughout this specification are not necessarily all referring to the same embodiment. Furthermore, the particular features, structures, or characteristics may be combined in one or more embodiments.

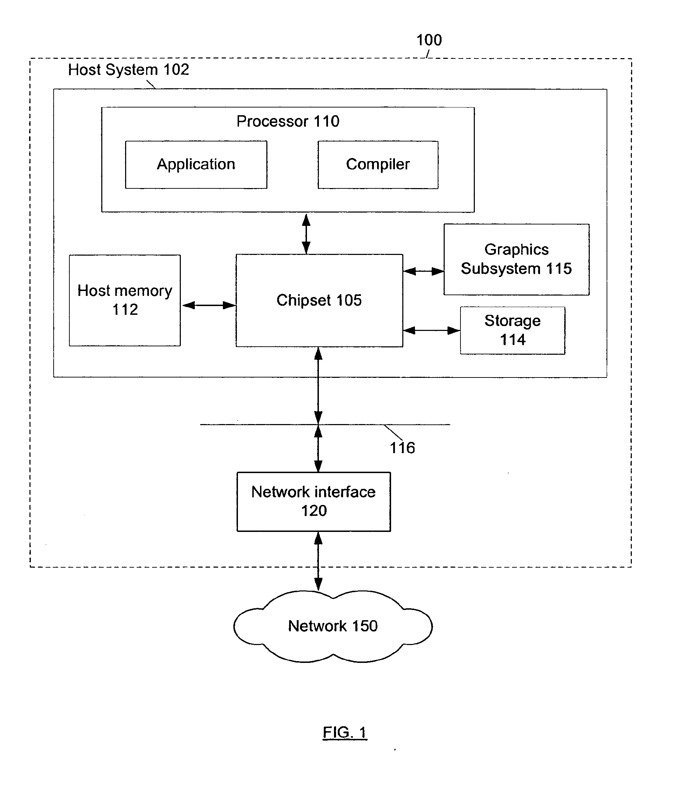

FIG. 1 depicts a block diagram of computer system 100. Some embodiments of the present invention may be used with computer system 100. Computer system 100 may include host system 102, bus 116, and network component 120.

Host system 102 may include chipset 105, processor 110, host memory 112, storage 114, and graphics subsystem 115. Chipset 105 may provide intercommunication among processor 110, host memory 112, storage 114, graphics subsystem 115, and bus 116. For example, chipset 105 may include a storage adapter (not depicted) capable of providing intercommunication with storage 114. For example, the storage adapter may be capable of communicating with storage 114 in conformance with any of the following protocols: Small Computer Systems Interface (SCSI), Fibre Channel (FC), and/or Serial Advanced Technology Attachment (S-ATA).

In some embodiments, chipset 105 may include data mover logic capable of performing transfers of information within host memory 112, or between network component 120 and host memory 112, or in general between any set of components in the computer system 100.

Processor 110 may be implemented as Complex Instruction Set Computer (CISC) or Reduced Instruction Set Computer (RISC) processors, multi-core, or any other microprocessor or central processing unit.

Host memory 112 may be implemented as a volatile memory device such as but not limited to a Random Access Memory (RAM), Dynamic Random Access Memory (DRAM), or Static RAM (SRAM).

Storage 114 may be implemented as a non-volatile storage device such as but not limited to a magnetic disk drive, optical disk drive, tape drive, an internal storage device, an attached storage device, flash memory, battery backed-up SDRAM (synchronous DRAM), and/or a network accessible storage device.

Graphics subsystem 115 may perform processing of images such as still or video for display. Graphics subsystem 115 could be integrated into processor 110 or chipset 105. Graphics subsystem 115 could be a stand-alone card communicatively coupled to chipset 105.

An application executed by processor 110 may request a compiler to compile a kernel that when executed by graphics subsystem 115 causes display of graphics. In one embodiment, the compiler introduces a "sendc" instruction into a thread and transfers the compiled thread to a thread-capable computation subsystem such as a graphics subsystem 115. In one embodiment, graphics subsystem 115 includes the capability to receive threads that specify subspans to be processed and displayed. A subspan may be a two-by-two pixel region associated with XY coordinates. The "sendc" instruction may not be executed until all preceding subspans having the same coordinates or identifiers and which have been submitted for processing prior, have been previously retired. Pixels of the same subspan are allowed to be processed to the point of near-retirement and wait until the ordering requirement has been met. Accordingly, most of the processing of a thread may be completed prior to ensuring of proper order of subspan retirement.

Bus 116 may provide intercommunication among at least host system 102 and network component 120 as well as other peripheral devices (not depicted). Bus 116 may support serial or parallel communications. Bus 116 may support node-to-node or node-to-multi-node communications. Bus 116 may at least be compatible with Peripheral Component Interconnect (PCI) described for example at Peripheral Component Interconnect (PCI) Local Bus Specification, Revision 3.0, February 2, 2004 available from the PCI Special Interest Group, Portland, Oregon, U.S.A. (as well as revisions thereof); PCI Express described in The PCI Express Base Specification of the PCI Special Interest Group, Revision 1.0a (as well as revisions thereof); PCI-x described in the PCI-X Specification Rev. 1.1, March 28, 2005, available from the aforesaid PCI Special Interest Group, Portland, Oregon, U.S.A. (as well as revisions thereof); and/or Universal Serial Bus (USB) (and related standards) as well as other interconnection standards.

Network component 120 may be capable of providing intercommunication between host system 102 and network 150 in compliance with any applicable protocols. Network component 120 may intercommunicate with host system 102 using bus 116. In one embodiment, network component 120 may be integrated into chipset 105. "Network component" may include any combination of digital and/or analog hardware and/or software on an I/O (input/output) subsystem that may process one or more network protocol units to be transmitted and/or received over a network. In one embodiment, the I/O subsystem may include, for example, a network component card (NIC), and network component may include, for example, a MAC (media access control) layer of the Data Link Layer as defined in the Open System Interconnection (OSI) model for networking protocols. The OSI model is defined by the International Organization for Standardization (ISO) located at 1 rue de Varembé, Case postale 56 CH-1211 Geneva 20, Switzerland.

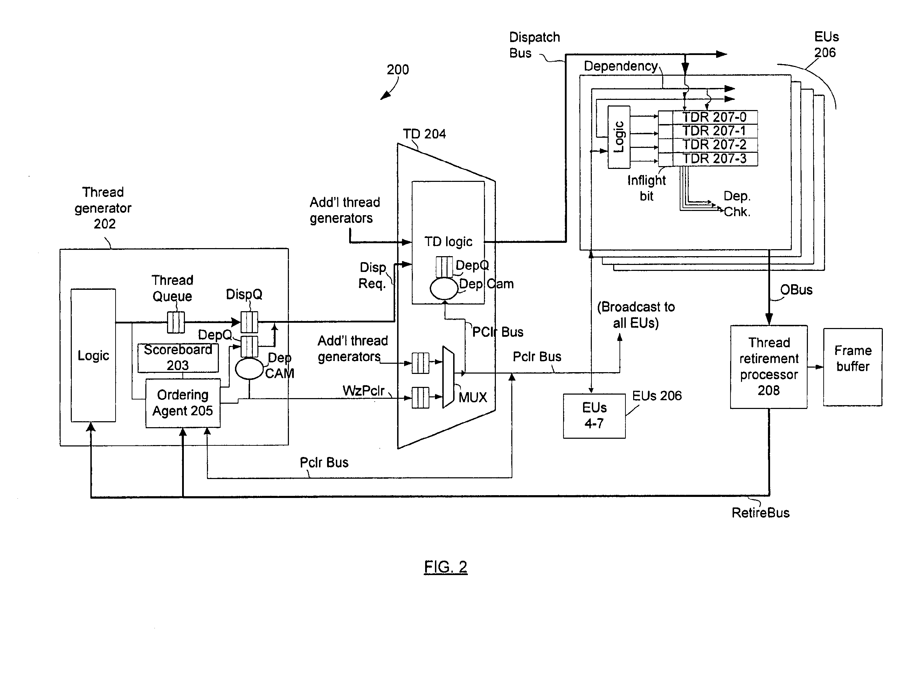

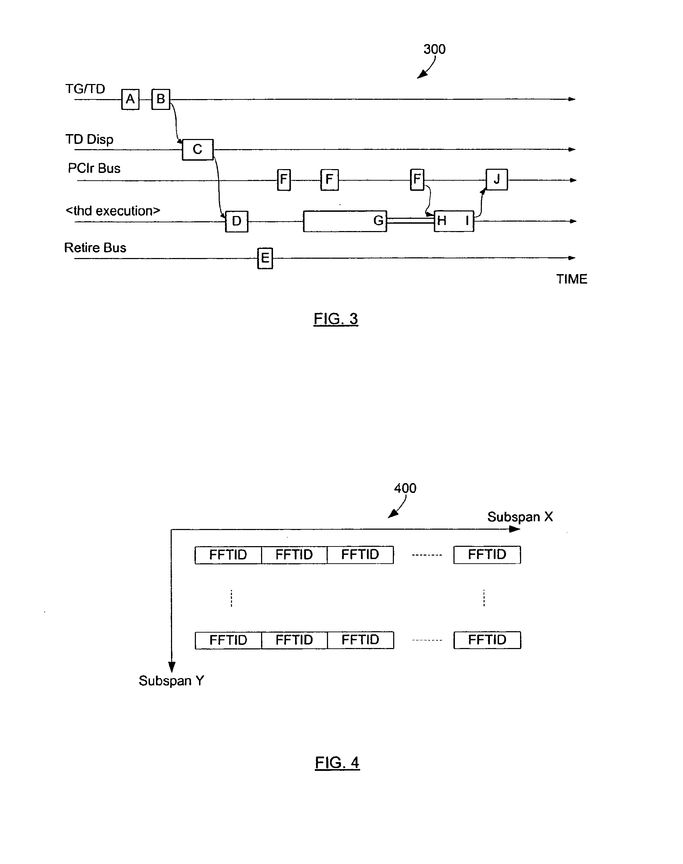

FIG. 2 depicts a high level block diagram of a thread ordering system 200 in accordance with an embodiment of the present invention. In one embodiment, thread ordering system 200 includes one or more thread generators such as thread generator 202, thread dispatcher (TD) 204, execution units (EU) 206, and a thread retirement processor 208. Additional thread generators similar to thread generator 202 may be added to system 200. An example operation of thread ordering system 200 is described with regard to FIG. 3.

The following describes an example embodiment when thread ordering system 200 is used in a 3D graphics pipeline. Thread ordering system 200 permits multiple subspans covering the same coordinates to be issued to the array of execution units and causes the subspans to retire in order. Processing of sizes of pixels other than subspans can be accomplished. The sequence of instructions for each thread to execute includes a "sendc" command that causes the EU to transfer the computed output of the processed thread to thread retirement processor 208. However, the EU does not execute the "sendc" command until retirement of all previously processed subspans of the same coordinates, if any, in one or more other thread. In one embodiment, a thread dependency register (TDR) (shown as TDR 0 - 3, for a four thread system) for each thread holds information as to one or more dependencies, if any, that must be satisfied before the associated thread is allowed to execute its "sendc" instruction. A dependency may be whether another thread causing processing of the subspan coordinates has not completed execution and caused the subspan of the same coordinates to be transferred to thread retirement processor 208. When no dependency exists for a thread, the EU is allowed to execute the "sendc" command of the thread when encountered. In response to encountering a "sendc" instruction for that thread while associated dependencies have yet to be cleared for that thread, the EU causes the thread to halt further instruction execution until all dependencies are cleared, effectively waiting in the EU array as opposed to the rasterizer or elsewhere.

In an embodiment, a simple bit-field identifying a specific critical section could be added to each dependency held in the TDR to support multiple critical sections so that proper ordering of thread and subspan processing can be achieved at various stages of a thread's execution sequence. In this case, the thread would identify which critical section it was executing, and only those dependencies in the TDR that were associated with that section would be used to determine if execution of the "sendc" instruction and beyond is allowed to occur.

FIG. 3 depicts an example time line of operations of thread orderer 200, in accordance with an embodiment of the present invention. In region A, thread generator 202 may prepare a thread for dispatch, allocate a fixed function thread identifier (FFTID) for the thread to identify the thread generator 202, check the scoreboard to gather the dependency of each unit of work in the thread, if any, and then issue a thread dispatch request to TD 204. For example, when thread orderer 200 is used in a 3D pipeline, a unit of work may include a subspan. In one embodiment, when thread orderer 200 is used in a 3D pipeline, the content of a thread may include pixel subspans, typically numbering up to 8 but other numbers of subspans can be used.

To allocate an FFTID for a thread, thread generator 202 may select an FFTID from a list of available FFTID, which may have been previously used, but is no longer in use. The FFTID is used going forward to refer to all work contained in the new thread. An FFTID may include a number associated with a thread and may include a "valid" indicator that may indicate that a communication is valid information. For example, an FFTID can include 1 valid bit and 8 bits of the FFTID.

Ordering agent 205 may perform: (1) gathering of dependent thread information and (2) clearing of dependent information on thread retirement. To perform operations (1) and (2), the scoreboard may be accessed as described with regard to FIG. 4. To assist with operations (1) and (2), dependency queue (Dep Q) and dependency CAM (Dep CAM) (FIG. 2) may be used.

Dependency queue may store dependency information associated with a unit of work. From the lookup operation of the scoreboard, dependency information is paired with a unit of work, and the pair are transmitted together. Dependency CAM may compare thread "clear" broadcasts to dependency information already enqueued for dispatch. If a match is found, the dependency is cleared prior to dispatch. Dependency CAM may prevent the condition that a dependency is detected at time of scoreboard query, but cleared prior to actual dispatch.

Thread generator 202 may include the capability to dispatch threads without dependency information, i.e., identifiers of other threads that process the similar work, but which no critical section is required. For example, the path through the thread queue and Dispatch queue (DispQ) (FIG. 2) provide for the dispatch of threads without dependency information. In addition, thread queue may hold other unit of work-related data while the scoreboard is being queried for that unit of work (e.g., subspan). In addition, dispatch queue (DispQ) may be used to hold thread (e.g., subspan) and related information which has completed scoreboard query, while waiting on assembly into a thread for dispatch to an execution unit.

In region B, TD 204 may select a thread for dispatch. Dependency queue (DepQ) of TD 204 may store dependency information associated with threads for dispatch. In one embodiment, thread dispatcher 204 may dispatch a thread to EU 206 if the number of dependencies is less than the capacity of the associated TDR in the EU to hold dependencies. If the TDR's capacity is exceeded, TD 204 may wait for outstanding threads to clear their dependencies until such time that TDR's capacity is no longer exceeded.

Of note, dependency CAM (Dep CAM) of TD 204 may clear any dependencies of dispatches that are taking place at the same time as a clear operation involving the thread dispatch. Clearing of dependencies may take place using Pclr bus.

The MUX of TD 204 may be used in the case of multiple ordering agents in the system. For example, MUX may select among enqueued requests from thread generators other than thread generator 202 or enqueued requests from thread generator 202.

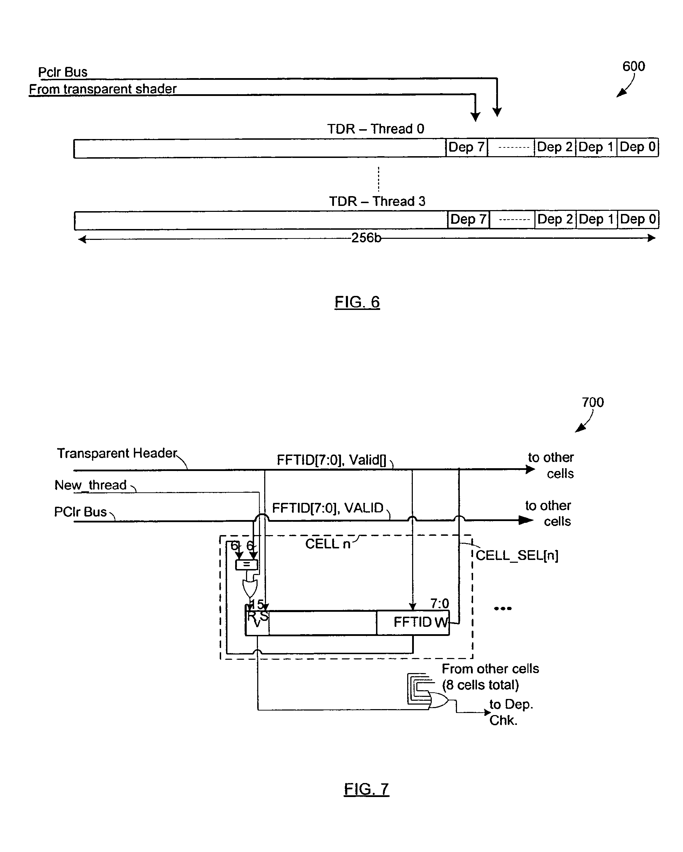

In region C, TD 204 may dispatch a thread with dependency information. Dependency information may be sent in a thread dispatch header. In one embodiment, the thread dispatch header may include 256 bits of the dispatch header and a field that identifies the FFTID of any dependent threads for the thread being dispatched. In one embodiment, up to eight dependencies may be identified per thread dispatch header. A Thread Dependency Register (TDR) among TDR 207-0 to 207-3 may be allocated for each thread in EU 206 and be populated using the dependency information from the thread dispatch header. FIGs. 6 and 7 provide a description of possible aspects of a TDR.

Of note, TD 204 includes the capability to dispatch threads with no dependency information. In addition, TD 204 includes the capability to dispatch threads with dependency information and an indication to clear a thread dispatch register.

In region D, EU 206 may execute a thread but does not execute a critical section of the thread, which is indicated by the "sendc" instruction.

In region E, thread retirement processor 208 may transmit an indication when each unit of work retires to thread generator 202 using the Retire bus. The following is a possible format of a communication on the Retire bus.

| Signal | Brief Description | Bits |
|---|---|---|
| Valid | Indicates the bus contains valid transmitted data at the current time. | 1 |
| FFTID[7:0] | Fixed function thread ID that recently retired. | 8 |
| Scoreboard index | Mapping into the scoreboard of the thread that just retired (e.g., coordinate mapping). | 12 |
| Last | Indicates that a final clear operation associated with retiring thread (final unit of work in a thread). | 1 |
| total | | 22 |

In the case where thread ordering system 200 is used in a 3D pipeline, thread retirement processor 208 may be implemented as a data port render cache (DAP/RC).

In region F, thread generator 202 may determine that some thread it issued has retired all units of work and may broadcast the FFTID of the thread via TD 204 to all EUs 206 over the Pclr bus. The following is a possible format of the broadcast communication over the Pclr bus.

| Signal | Brief Description | Bits |
|---|---|---|
| Valid | Indicates the bus contains valid transmitted data at the current time. | 1 |
| FFTID[7:0] | Fixed function thread ID that is to be cleared from TDR. | 8 |
| FFID[3:0] | Fixed function identifier identifies the fixed function from which the thread to be cleared originated (e.g., rasterizer). | 4 |
| total | | 13 |

Upon detection of valid signaling over the PCIr bus, the EU logic may determine which TDR is targeted in order to clear dependency information. The EU logic may capture the PCIr broadcast communication and may compare the FFTID to any dependent FFTID stored in the TDRs. If the combination of (FFID, FFTID) in the broadcast communication matches the combination of (FFID, FFTID) in any valid entry in any TDR in the EU, that entry in the TDR may be cleared.

In some cases, a thread is dispatched to EUs without dependency information attached, and dependency information may come sometime later. The TDR associated with such thread has invalid information and such a condition must not allow the thread to enter the critical section until dependency information is received and dependencies, if any, resolved. The inflight bit associated with the TDR of such thread may indicate whether the TDR stores valid thread dependency information.

In region G, an EU 206 may attempt to execute a "sendc" instruction of a thread. The EU 206 does not execute the "sendc" instruction if the thread's TDR is not valid, or is valid but not completely clear, which indicates that all dependent work of the thread are to be processed has been completed by other threads.

In region H, the EU 206 is allowed to execute the "sendc" of the thread and subsequent instructions in the thread. Block H may occur in response to receipt of a message over the PCIr bus (third region F) which clears the thread's final dependent entry in the thread's TDR. The thread is now able to enter the critical section with all dependent predecessor work completed.

If the critical section generated retirement data, e.g. subspans being written to a frame buffer in the case of a 3D pipeline, other logic in the system may ensure that the retirement order established at this point is maintained. For example, in the case of a 3D pipeline, subspans may retire in order all the way to the frame buffer because they are presented to thread retirement processor 208 in order by virtue of techniques described herein, as well as the thread retirement processor 208 having an in-order-of-delivery processing policy.

In region I, the thread terminates.

In region J, thread retirement processor 208 may signal ordering agent 205 to indicate retirement of a unit of work. Ordering agent 205 may update scoreboard 203 to clear dependency information of terminated threads. In addition, ordering agent 205 may generate a message over the Pclr bus to TD 204 to communicate retirement of the subspan to EUs 206 by broadcasting the FFTID of the subspan's thread via TD 204 over the Pclr bus.

FIG. 4 depicts an example format of a scoreboard table, in accordance with an embodiment of the present invention. To retrieve entries from the scoreboard in the case where the scoreboard is used in a 3D graphics pipeline, the following activities may take place. At reset, the scoreboard initializes all of its entries in the scoreboard to an "invalid" state. This may be indicated by a per-entry valid bit or a reserved FFTID code such as the value OFFh, for example. Later, an ordering agent 205 (FIG. 2) may query the scoreboard for dependency information using a unique ID for the portion of work in question and the associated FFTID that will be assigned to the thread that contains that work. In the case of a 3D pipeline, a subspan XY location is used as the unique ID with which to query the scoreboard along with FFTIDs associated with the subspans. In the case of a 3D pipeline, the scoreboard uses the XY coordinates or portion thereof of each subspan to perform a lookup and determine if an FFTID entry at the coordinates is present. For example, the most significant bits of the XY coordinates of each subspan can be used to index the array. The FFTID entry present at the coordinates identifies the dependent thread if the FFTID is indicated as valid. Implementations may choose to use a portion of the XY address for scoreboard addressing, in which case aliasing is possible, and a false-dependency may be indicated. This may not be a problem because the query of the lookup table is only required to identify known cases of non-dependent XY.

If the scoreboard entry is valid and its FFTID match that presented in the query, the scoreboard transmits the FFTID to the ordering agent 205 to indicate a dependency of the subspan for which the query was performed. The scoreboard replaces the FFTID in the array with the FFTID of the subspan for which a query was made.

If the bits used to identify the subspan references an invalid entry, there is no other thread in the EU array that has same subspan and therefore no dependency for that subspan. The FFTID entry is made valid and updated with the FFTID of the subspan for which the query was made.

The scoreboard table can be used in environments other than a 3D graphics pipeline. In such scenarios, unit of works are used in place of subspans.

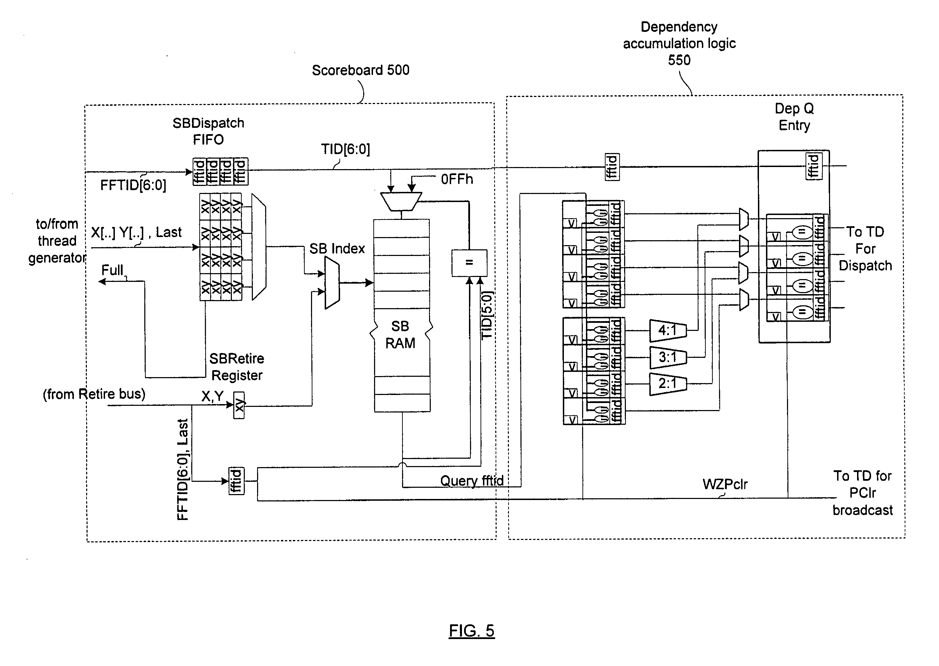

FIG. 5 depicts an example implementation of scoreboard (SB) 500, in accordance with an embodiment of the present invention. The following description of SB 500 is for use in a 3D pipeline. However, SB 500 can be used in scenarios other than a 3D pipeline. The scoreboard table is addressed via a portion of a subspan's XY location and stores FFTID entries and an FFTID entry may identify the dependency of a subspan address by indicating the thread in which the subspan address has been dispatched. For example, if a valid bit of an FFTID is true, then a thread exists in the EU array which is currently processing that XY location, and thus a dependent thread is pending for that subspan. The FFTID identifies the previous dependency and when chained, identifies an order in which subspans are to be retired.

SB 500 includes logic to retire scoreboard entries. During a retirement, the SB RAM's contents are compared to the retired thread's FFTID and if they match, this indicates there are no more subspans of that XY in the array, and the entry is returned to the invalid state. If they do not match, no action is taken. Regardless of match or not, when the last subspan retires, the FFTID is enqueued to TD 204 for eventual broadcast on the PCIr bus. Processing of scoreboard queries may be a second priority to the processing of scoreboard retire operations.

More generally, a scoreboard entry represents a "coverage block" of work that maps to the unique ID of that work, and contains the FFTID to which that work has been assigned, if any. Small coverage blocks can cause excessive lookups but large coverage blocks can cause excessive aliasing and false-dependencies. An implementation may be flexible enough to allow for configurable size coverage blocks. However, the scoreboard can only keep track of one size coverage block at any one time. If a change in coverage block is needed, thread generator 202 allows all outstanding threads to complete, before querying the new size of coverage block. In one embodiment, there are three different sizes of coverage blocks, any change in size may involve a flush of the scoreboard. The target ID is used to index the RAM and depends on the coverage block size. The following table lists the various pixel scoreboard dispatch modes, what is targeted in the dispatch, and therefore what would need to be tracked for dependencies.

| Dispatch Mode | Target | Scoreboard Index (S=SampleIndex) | CB Size |
|---|---|---|---|
| 8 Pixel 1X | 2 indep. subspans | 2 * (X[6:1]Y[6:1]) | Size0 |
| 8 Pixel 4X PERPIXEL | All 4 sample slots of 2 indep. subspans | 2 * (X[6:1]Y[6:1]) | Size0 |
| 8 Pixel 4X PERSAMPLE | Selected pair of sample slots of 1 subspan | 1 * (X[6:1]Y[5:1]S[1]) | Size1 |
| 16 Pixel 1X | 4 indep subspans | 4 * (X[6:1]Y[6:1]) | Size0 |
| 16 Pixel 4X PERPIXEL | All 4 sample slots of 4 indep. subspans | 4 * (X[6:1]Y[6:1]) | Size0 |
| 16 Pixel 4X PERSAMPLE | All 4 sample slots of 1 subspan | 1 * (X[6:1]Y[5:1]) | Size0 |
| 32 Pixel 1X | 8 indep subspans | 8 * (X[6:1]Y[6:1]) | Size0 |
| 32 Pixel 4X PERPIXEL | All 4 sample slots of 8 indep. subspans | 8 * (X[6:1]Y[6:1]) | Size0 |
| 32 Pixel 4X PERSAMPLE | All 4 sample slots of 2 indep. subspans | 2 * (X[6:1]Y[5:1]) | Size0 |
| 32 Pixel Contiguous | 1 8x4 pixel block | 1 * (X[8:3]Y[7:2]) | Size2 |
| 64 Pixel Contiguous | 1 8x8 pixel block | 2 * (X[8:3]Y[7:2]) | Size2 |

The following are possible ordering schemes relating to scoreboard updates and broadcasts. Retire scoreboard updates may occur before broadcasts of Pclr bus to prevent deadlock occurring from a SBQuery being dependent on a Pclr bus communication that has already been broadcast. In addition, a Pclr broadcast may not pass a non-CAMed dependency. In addition, PCIr may be broadcast to the EU before an FFTID is reused to avoid a race condition between the FFTID reuse and the old PCIr generating a false PCIr on the second use of the FFTID.

FIG. 5 also depicts dependency accumulation logic 550 that performs dependency accumulation, in accordance with an embodiment of the present invention. Each new dependency is checked against previously accumulated dependencies and only new dependencies are latched. Likewise during dependency accumulation the PCIr bus is monitored and any retiring thread is removed as a dependency.

FIG. 6 depicts an example format of TDR register 600 in accordance with an embodiment of the present invention. The register may be populated with up to 16 fields, with each cell holding the information for one thread dependency. In one implementation, a TDR register stores eight dependencies, Dep 7 to Dep 0.

FIG. 7 depicts an example format of a basic dependency cell in a TDR register 700 in accordance with an embodiment of the present invention. Each cell may store 16 bits. A "Valid" (V) bit may be in the most significant bit position and a n-bit FFTID[] field may be in the least significant bits. The Valid bit indicates the validity of the FFTID field, and is initially set upon new thread delivery (as transmitted by line "New_thread").

A comparator compares the FFTID value of the register to the FFTIDs being broadcast on the PCLR bus. If a broadcast FFTID matches that held within the cell and the broadcast FFID matches the EU/Thread's FFID, the cell's Valid bit is reset to clear a dependency.

A dependency determination may be when the Valid bit (V) of all cells is false, such as when the Valid bits are either never populated or populated but subsequently cleared. The dependency result per thread is sent to the Dependency Check ("Dep. Chk.") unit for use in determining whether a "sendc" instruction is allowed to execute.

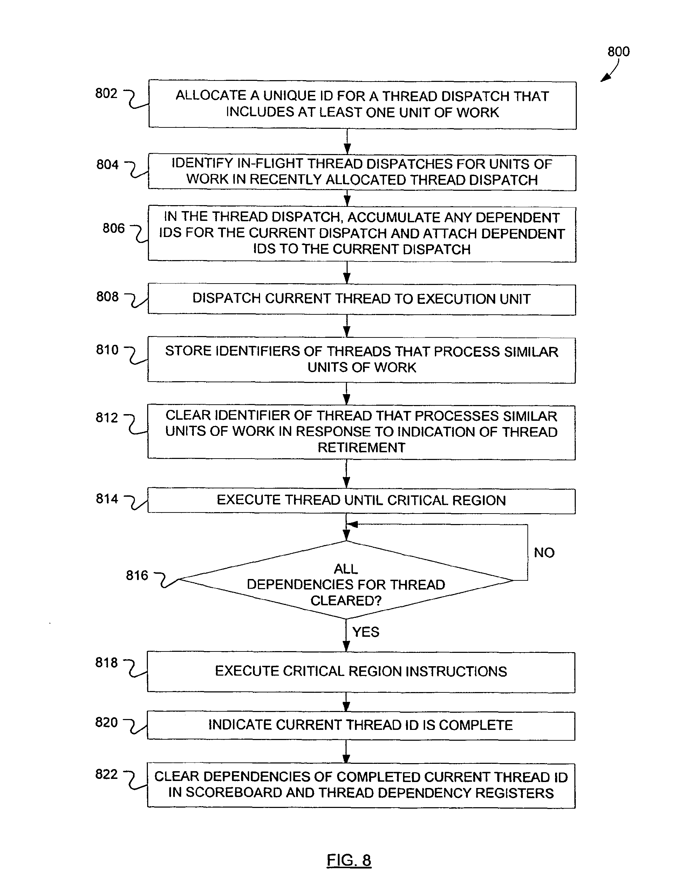

FIG. 8 depicts an example flow diagram of a process 800, in accordance with an embodiment of the present invention. Block 802 may include allocating a unique identifier for a thread dispatch that includes at least one unit of work. In the case where process 800 is used in a 3D pipeline, a unit of work may include a subspan.

Block 804 may include identifying in-flight work that at match the work slated for the recently allocated thread dispatch. For example, in the case where process 800 is used in a 3D pipeline, the rasterizer queries the scoreboard with a set of XY coordinates of subspans in the current dispatch and the ID of the dispatch. The scoreboard compares the coordinates against the list of in-flight subspan coordinates that remain in-flight in the EUs. For matching coordinates, the scoreboard logs the thread ID of the dispatch and returns to the windower the ID of the outstanding thread that contains the match. For all coordinates, the scoreboard stores the dispatch thread ID for comparison for later queries.

Block 806 may include accumulating any dependent IDs for the current dispatch and attaching dependent IDs to the current dispatch. For example, the rasterizer adds to the dispatch payload the list of thread IDs returned by the scoreboard and signals the thread dispatcher to issue the thread to an EU.

Block 808 may include dispatching the current thread to an execution unit.

Block 810 may include storing identifiers of threads that process similar units of work. In the case where process 800 is used in a 3D pipeline, similar units of work are the same subspan coordinates. For example, the EU captures the incoming thread and logs the thread dependency IDs to the Thread Dependency Register (TDR).

Block 812 may include clearing identifiers of retired threads in response to an indication of thread retirement. For example, the EU monitors the broadcast by the scoreboard of thread IDs that have retired and compares the broadcast thread IDs to those held in the Thread Dependency Register. If a match is found, the dependency is cleared.

Block 814 may include executing the current thread until reaching its critical region. For example, the beginning of the critical region can be indicated by the "sendc" instruction.

Blocks 816 and 818 may include waiting until all dependencies for the current thread clear before executing the critical region instruction of the current thread. For example, if all dependencies in the Thread Dependency Register are either invalid or have been cleared, the "sendc" instruction is allowed to execute and the processing continues. In the case where process 800 is used in a 3D pipeline, clearing of all dependencies indicates that there is no other unretired subspan of the same coordinates as those of any subspan in the current thread. Where process 800 is used in a pixel shader, the "sendc" causes the processed subspans of the current thread to be sent to the frame buffer and the thread completes.

Block 820 may include signaling that the current thread is complete. For example, upon receipt of the processed pixels, the frame buffer signals to the thread dispatcher, scoreboard, and rasterizer that the current thread is complete by indicating the ID of the completed thread.

Block 822 may include clearing dependencies of the completed thread. For example, block 822 may include clearing dependencies of a completed thread ID in a scoreboard and broadcasting to the EUs to clear any dependencies in thread dependency registers. For example, in the case where process 800 is used in a 3D pipeline, the scoreboard marks the XY coordinates of subspans associated with the completed thread ID as complete and the scoreboard broadcasts a "Clear" message to the thread dependency registers of EUs to clear any dependencies in pending threads.

Embodiments of the present invention may be implemented as any or a combination of: one or more microchips or integrated circuits interconnected using a motherboard, hardwired logic, software stored by a memory device and executed by a microprocessor, firmware, an application specific integrated circuit (ASIC), and/or a field programmable gate array (FPGA). The term "logic" may include, by way of example, software or hardware and/or combinations of software and hardware.

Embodiments of the present invention may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments of the present invention. A machine-readable medium may include, but is not limited to, floppy diskettes, optical disks, CD-ROMs (Compact Disc-Read Only Memories), and magneto-optical disks, ROMs (Read Only Memories), RAMs (Random Access Memories), EPROMs (Erasable Programmable Read Only Memories), EEPROMs (Electrically Erasable Programmable Read Only Memories), magnetic or optical cards, flash memory, or other type of media / machine-readable medium suitable for storing machine-executable instructions.

The drawings and the forgoing description gave examples of the present invention. Although depicted as a number of disparate functional items, those skilled in the art will appreciate that one or more of such elements may well be combined into single functional elements. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of the present invention, however, is by no means limited by these specific examples. Numerous variations, whether explicitly given in the specification or not, such as differences in structure, dimension, and use of material, are possible. The scope of the invention is at least as broad as given by the following claims.

## Claims

1. A method comprising:
determining, in response to an attempt to execute an instruction of a thread, whether no other predecessor unit of work associated with the thread has been requested for processing; and
permitting, in response to completed processing of every of the other predecessor unit of work, execution of the instruction.

2. The method of claim 1, wherein the instruction comprises an instruction to request to proceed with program execution if dependencies have been satisfied.

3. The method of claim 1, further comprising:
storing an array of thread identifiers, wherein the thread identifiers identify a thread involved in the processing of a unit of work; and, optionally,
selectively communicating, in response to all units of work grouped within a second thread retiring, the identification of the second thread; or
receiving a request to identify a thread associated with unit of work and a second thread identifier for a predecessor unit of work;
providing the identity of the thread associated with the unit of work; and
storing the second thread identifier for the unit of work in the array.

4. The method of claim 1, further comprising:
storing an array of thread identifiers, wherein the thread identifiers identify a thread involved in the processing of a unit of work;
selectively communicating, in response to all units of work grouped within a second thread retiring, the identification of the second thread; and
at least one of:
selectively clearing, in response to the communication of the identification of the second thread, the identification of the second thread used to indicate a pending request for processing unit of work with an order requirement;
or
selectively clearing, in response to the identification of the second thread matching the thread identifier, a thread identifier in the stored array.

5. The method of claim 1, wherein the unit of work comprises at least one subspan.

6. The method of claim 1, wherein the permitting execution comprises transfer of at least one processed subspan to a data port render cache.

7. An apparatus comprising:
a scoreboard to store at least one identifier of a thread used to process a unit of work;
a thread generator to identify each pending thread that processes a unit of work having an ordering requirement with work associated with a first thread;
a thread dependency register to store a pending thread identifier associated with each unit of work for the first thread;
an execution unit to execute the first thread, wherein the execution unit is to execute the first thread until reaching an instruction, wherein the execution unit is to selectively execute the instruction in response to the thread dependency register for the first thread indicating no pending thread identifiers; and
a thread retirement processor to monitor for completed threads.

8. The apparatus of claim 7, wherein execution of the instruction causes transfer of an output from the first thread to the thread retirement processor.

9. The apparatus of claim 7, wherein the thread retirement processor communicates a retirement of a second thread and wherein the scoreboard selectively clears an identifier of the second thread in response to the communication.

10. The apparatus of claim 9, further comprising at least one of:
a bus to transfer the communication of retirement of the second thread to the thread generator;
or
a bus to transfer the communication to the thread dependency register.

11. The apparatus of claim 9, further comprising:
a bus to transfer the communication to the thread dependency register, wherein the thread dependency register is to selectively clear the pending thread identifier based on the communication.

12. The apparatus of claim 7, wherein the scoreboard is to:
receive a request to identify a thread associated with an unit of work and a thread identifier of the thread which will contain the work;
provide the identity of the thread associated with the unit of work; and
store the thread identifier for the unit of work.

13. The apparatus of claim 7, wherein the unit of work comprises at least one subspan.

14. The apparatus of claim 7, wherein the thread retirement processor comprises a data port render cache.

15. A system comprising:
a host system comprising a storage device;
a graphics subsystem communicatively coupled to the host system, wherein the graphics subsystem is to retire processed units of work in order by monitoring for no pending thread processes involving units of work directed to similar operations; and
a display communicatively coupled to the graphics subsystem.

16. The system of claim 15, wherein the graphics subsystem comprises the apparatus of any one of claims 7 - 14

17. The system of either one of claims 15 or 16, wherein units of work, directed to similar operations, comprise subspans directed to overlapping coordinates.
